(19) Europäisches Patentamt
European Patent Office
Office européen des brevets

(11) Veröffentlichungsnummer: **0 193 060**
**A2**

(12) # EUROPÄISCHE PATENTANMELDUNG

(21) Anmeldenummer: **86101967.7**

(22) Anmeldetag: **17.02.86**

(51) Int. Cl.⁴: **C 08 L 83/10**
C 08 G 77/42
//(C08L83/10, 57:00)

(30) Priorität: **26.02.85 DE 3506680**

(43) Veröffentlichungstag der Anmeldung:
**03.09.86 Patentblatt 86/36**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Paul, Winfried, Dr.**
**Bethelstrasse 22**
**D-4150 Krefeld(DE)**

(72) Erfinder: **Grigo, Ulrich, Dr.**
**Michelsheide 9**
**D-4152 Kempen 3(DE)**

(72) Erfinder: **Müller, Peter Rolf, Dr.**
**Paul-Klee-Strasse 76**
**D-5090 Leverkusen 1(DE)**

(72) Erfinder: **Nouvertné, Werner, Dr.**
**Scheiblerstasse 95**
**D-4150 Krefeld 1(DE)**

(54) **Thermoplastische Formmassen auf Basis von Polysiloxan-Polycarbonat-Blockcopolymeren.**

(57) Gegenstand der vorliegenden Erfindung sind thermoplastische Formmassen enthaltend Polydiorganosiloxan-Polycarbonat-Blockcopolymere, kautschukelastische Polymerisate und gegebenenfalls Polyalkylenterephthalate.

EP 0 193 060 A2

BAYER AKTIENGESELLSCHAFT 5090 Leverkusen, Bayerwerk
Konzernverwaltung RP
Patentabteilung PS/by-c

Thermoplastische Formmassen auf Basis von Polysiloxan-Polycarbonat-Blockcopolymeren

Gegenstand der vorliegenden Erfindung sind thermoplastische Formmassen enthaltend

(A) 30 bis 98, vorzugsweise 40 bis 90 Gew.-Teile eines Polydiorganosiloxan-Polycarbonat-Blockcopolymers mit mittleren Molekulargewichten $\bar{M}w$ von 10 000 bis 30 000, vorzugsweise von 15 000 bis 25 000 ($\bar{M}w$ ermittelt in bekannter Weise durch Ultrazentrifugation oder Streulichtmessung) und mit einem Gehalt an Poly(diorganosiloxan)-Struktureinheiten zwischen 10 Gew.-% und 0,5 Gew.-%, vorzugsweise zwischen 7 Gew.-% und 1 Gew.-%, bezogen jeweils auf Gesamtgewicht des Blockcopolymeren, wobei die Blockcopolymeren, ausgehend von α,ω-Bishydroxyaryloxyendgruppenhaltigen Polydiorganosiloxanen mit einem Polymerisationsgrad $\bar{P}n$ zwischen 5 und 100, vorzugsweise zwischen 20 und 80, unter Mitverwendung von Kettenabbrechern hergestellt werden,

(B) 1 bis 30, vorzugsweise 5 bis 20 Gew.-Teile eines kautschukelastischen Polymerisats mit einer Glasübergangstemperatur von unter $-20^{0}$C und

(C) 0 bis 50 Gew.-Teile eines thermoplastischen Polyalkylenterephthalats, wobei die Summe der Gewichtsteile der Komponenten (A) + (B) + (C) jeweils 100 Gew.-Teile beträgt,

die dadurch gekennzeichnet sind, daß die Komponente (A) unter Verwendung von Monoalkylphenolen oder Dialkylphenolen mit insgesamt 8 bis 20 C-Atomen in den Alkylsubstituenten, vorzugsweise von Phenolen der Formel (III)

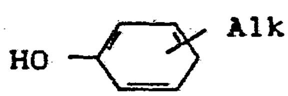

(III)

worin

Alk einen linearen oder verzweigten Alkylrest mit 8 bis 15 C-Atomen darstellt, als Kettenabbrecher nach dem Phasengrenzflächenverfahren hergestellt ist.

Die Polydiorganosiloxan-Polycarbonat-Blockcopolymeren gemäß Komponente (A) und deren Herstellung sind Gegenstand unserer deutschen Patentanmeldung P 35 06 472.2 (Le A 23 654), aus der die folgenden Ausführungen übernommen sind:

Gemäß deutscher Patentanmeldung P 35 06 472.2 (Le A 23 654) werden thermoplastische Poly(diorganosiloxan)-Polycarbonat-Blockcopolymere mit mittleren

Molekulargewichten Mw (Gewichtsmittel) von etwa 10 000 bis 30 000, vorzugsweise von etwa 15 000 bis 25 000 (ermittelt in bekannter Weise durch Ultrazentrifugation oder Streulichtmessung) und mit einem Gehalt an Poly-(diorganosiloxan)Struktureinheiten zwischen 10 Gew.-% und 0,5 Gew.-%, vorzugsweise zwischen 7 Gew.-% und 1 Gew.-%, bezogen jeweils auf Gesamtgewicht des Blockcopolymeren, wobei die Poly(diorganosiloxan)-Strukturen einen Polymerisationsgrad zwischen 5 und 100, vorzugsweise zwischen 20 und 80 haben, aus

a) α,ω-Bis-hydroxyaryloxy-polydiorganosiloxanen mit Polymerisationsgraden zwischen 5 und 100, vorzugsweise zwischen 20 und 80, vorzugsweise solchen der Formel (I)

b) anderen Diphenolen, vorzugsweise der Formel (II),

c) Kettenabbrechern und gegebenenfalls

d) Verzweigern,

nach den bekannten Methoden des Zweiphasengrenzflächenverfahrens mit Phosgen hergestellt, wobei man als Kettenabbrecher Monoalkylphenole oder Di-alkylphenole mit insgesamt 8 bis 20 C-Atomen in den Alkylsubstituenten, vorzugsweise solche der Formel (III)

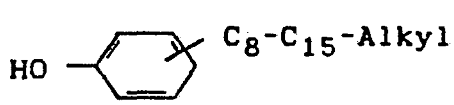

(III)

in ausreichenden Mengen, vorzugsweise in Mengen von 1,0 Mol-% bis 10 Mol-%, bezogen auf eingesetzte Diphenole der Komponente b), einsetzt, wobei quantitative Umsetzung der phenolischen Komponenten gegeben ist.

Gegenstand dieser deutschen Patentanmeldung P 35 06 472.2 (Le A 23 654) sind außerdem die nach diesem Verfahren erhältlichen Blockcopolymeren mit Monoalkylphenyl- oder Dialkylphenyl-Endgruppen.

Diese Produkte haben ein verbessertes Entformungs- und Fließverhalten und einen Zäh-Spröd-Übergang, der zu niederen Temperaturen verschoben ist.

Gemäß dieser deutschen Patentanmeldung P 35 06 472.2 (Le A 23 654) einzusetzende α,ω-Bishydroxy-aryloxy-polydiorganosiloxane gemäß Komponente a) sind z.B. aus US 3 419 634 bekannt.

Bevorzugt einzusetzende α,ω-Bis-hydroxy-aryloxyendgruppen-haltige Polydiorganosiloxane sind solche der Formel (I)

$$HO\text{-}Ar\text{-}O(\text{-}\underset{\displaystyle R}{\overset{\displaystyle R}{Si}}\text{-}O\text{-})_o\text{-}(\text{-}\underset{\displaystyle R^1}{\overset{\displaystyle R}{Si}}\text{-}O\text{-})_p\text{-}(\text{-}\underset{\displaystyle R^1}{\overset{\displaystyle R^1}{Si}}\text{-}O\text{-})_q\text{-}Ar\text{-}OH \qquad (I)$$

worin

Ar gleiche oder verschiedene Arylenreste aus Diphenolen mit vorzugsweise 6 bis 30 C-Atomen sind und

R und $R^1$ gleich oder verschieden sind und lineares Alkyl, verzweigtes Alkyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten $n = o + p + q = 5$ bis 100, vorzugsweise 20 bis 80, ist.

Alkyl ist in vorstehender Formel (I) beispielsweise $C_1$-$C_{20}$-Alkyl; Aryl ist in vorstehender Formel (I) $C_6$-$C_{14}$-Aryl. Halogeniert bedeutet in vorstehender Formel I teilweise oder vollständig chloriert, bromiert oder fluoriert. Beispiele für Alkyle, Aryle, halogenierte Alkyle und halogenierte Aryle sind Methyl, Ethyl, Propyl, n-Butyl, tert.-Butyl, Phenyl, Naphthyl, Chlormethyl und Trifluorpropyl.

Zur Herstellung der erfindungsgemäß einzusetzenden α,ω-Bis-hydroxy-aryloxypolydiorganosiloxane gemäß Komponente a), vorzugsweise der Formel (I), einzusetzende Diphenole sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
α,α-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 271 367 und 2 999 846 und in den deutschen Offenlegungsschriften 2 063 050 und 2 211 957 aufgeführt.

Vorzugsweise geeignete Diphenole zur Herstellung der α,ω-Bishydroxy-aryloxy-diorganosiloxane gemäß Komponente a) sind solche der Formel (II)

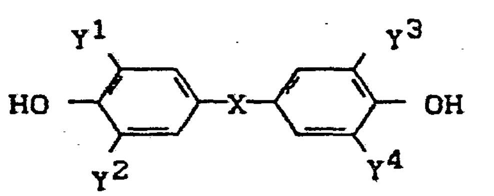 (II),

worin

X eine Einfachbindung, $-CH_2-$, 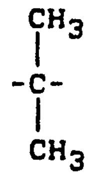 , 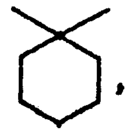, O,S,$SO_2$

oder 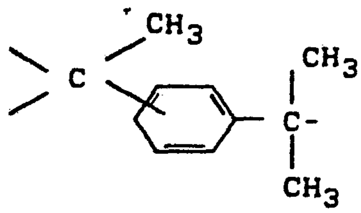 bedeuten und

$Y^1$ bis $Y^4$ gleich oder verschieden sind und Wasserstoff, $C_1$-$C_4$-Alkyl, vorzugsweise Methyl, oder Halogen, vorzugsweise Chlor oder Brom bedeuten.

Bevorzugte Diphenole sind beispielsweise

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Gemäß deutscher Patentanmeldung P 35 06 472.2 (Le A 23 654) einsetzbare andere Diphenole gemäß Komponente b) sind die vorstehend aufgeführten, wobei wiederum die bevorzugt genannten der Formel (II) entsprechen.

Gemäß deutscher Patentanmeldung P 35 06 472.2 (Le A 23 654) geeignete Monoalkylphenole bzw. Dialkylphenole können lineare Alkyl-Reste und verzweigte Alkyl-Reste enthalten. Beispiele für die erfindungsgemäß verwendbaren Kettenabbrecher gemäß Komponente c) sind p-Isooctylphenol, p-Nonylphenol, 3,5-Di-tert.-butyl-phenol, p-tert-Octylphenol, p-Dodecyl-phenol, 2-(3.5-Dimethyl-heptyl)-phenol und 4-(3.5-Dimethyl-heptyl)-phenol.

Anstelle der Monoalkylphenole bzw. Dialkylphenole können auch deren Halogenkohlensäureester eingesetzt werden.

Als Verzweiger gemäß Komponente d) sind solche mit drei oder mehr als drei funktionellen Gruppen, insbesondere solche mit drei oder mehr als drei phenolischen Hydroxylgruppen einsetzbar, wobei die üblicherweise bekannten Mengen an Verzweiger zwischen 0,05 und 2 Mol-%, bezogen auf Diphenole der Komponente b), einzuhalten sind. Die Herstellung verzweigter Polycarbonate ist beispielsweise in den DT-OS 1 570 533 und DT-OS 1 595 762 sowie in US-PS 3 544 514 beschrieben.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-bis-(2'hydroxy-5'-methyl-benzyl)-4-methylphenol, 2-(4-Hydroxyphenyl)-2-(2,4-dihydroxyphenyl)-propan und 1,4-Bis-(4,4'-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die Zugabe der α,ω-Bis-hydroxyaryloxyendgruppen-haltigen Polydiorganosiloxane und der Kettenabbrecher im Zweiphasengrenzflächenverfahren kann zusammen mit den anderen Diphenolen gemäß Komponente b) vor der Phosgeneinleitung erfolgen oder separat während oder nach der Phosgeneinleitung, in jedem Fall aber vor der Zugabe des Polykondensationskatalysators.

Geeignete organische Lösungsmittel für das Zweiphasengrenzflächenverfahren sind die für die thermoplastischen Polycarbonate bekannten wie beispielsweise Methylenchlorid oder Chlorbenzol.

Geeignete basische Verbindungen für die Bildung der wäßrigen alkalischen Phase sind Lösungen von LiOH, NaOH, KOH, $Ca(OH)_2$ und/oder $Ba(OH)_2$ in Wasser.

Geeignete Katalysatoren für die Polykondensation nach dem Zweiphasengrenzflächenverfahren sind die für die Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden.

Die Menge an Katalysator für das Zweiphasengrenzflächenverfahren variiert je nach eingesetztem Diphenol zwischen 0,2 - 5 Mol-%, bei Einsatz von tetramethylsubstituierten Diphenolen zwischen 5 - 10 Mol-%, bezogen jeweils auf die Gesamtmenge an eingesetzten Diphenolen gemäß Komponente b).

Die Mengen an organischer Phase werden vorzugsweise so gewählt, daß die Zweiphasengrenzflächenpolykondensation mit 5 bis 20 %iger organischer Lösung, vorzugsweise 10 bis 15 %iger organischer Lösung durchgeführt wird.

Bei der Herstellung nach dem Zweiphasengrenzflächenverfahren sind die Mengen an wäßrig alkalischer Phase volumenmäßig vorzugsweise gleich der Menge der gesamten organischen Phase. Sie können volumenmäßig auch größer oder kleiner als die gesamten Mengen der organischen Phase sein.

Der pH-Wert der wäßrigen Phase liegt während der Reaktion zwischen pH 9 - 14, vorzugsweise zwischen pH 12 - 13.

Die jeweils einzusetzenden Reaktantenverhältnisse von anderem Diphenol gemäß Komponente b) zu Hydroxy-aryloxyterminiertem Polydiorganosiloxan gemäß Komponente c) richten sich nach dem zu erzielenden Gehalt an Poly-(diorganosiloxan)-Einheiten im erfindungsgemäß herzustellenden Blockcopolymeren, wobei normalerweise die quantitative Umsetzung der Reaktanten gegeben ist.

Als Carbonatspender für die Herstellung nach dem Zweiphasengrenzflächenverfahren dienen in bekannter Weise Kohlensäurehalogenide, insbesondere Kohlensäurechloride, wie beispielsweise Phosgen, $COBr_2$, oder die Bischlorkohlensäureester von Diphenolen in entsprechender Menge, wobei jeweils pro Halogen-Kohlensäure-Gruppe weniger als 1/2 Mol Diphenol verwendet wird.

Die Isolierung der aromatischen thermoplastischen Blockcopolymeren kann nach der von der Polycarbonatsynthese nach dem Zweiphasengrenzflächenverfahren her bekannten Methode erfolgen. Hierbei wird die organische, das Copolycarbonat gelöst enthaltende Phase abgetrennt, gewaschen und anschließend das Copolycarbonat durch Eindampfen der Lösung isoliert, wobei als Endstufe des Aufarbeitungsprozesses vorzugsweise ein Ausdampfextruder benutzt wird.

Den erhältlichen Blockcopolymeren können übliche Zusatzstoffe vor, während oder nach deren Herstellung zugegeben werden. Erwähnt seien in diesem Zusammenhang beispielsweise Farbstoffe, Pigmente, Stabilisatoren gegen Feuchtigkeits-, Hitze- und UV-Einwirkung, Füllstoffe wie Glaspulver, Quarzerzeugnisse, Graphit, Molybdänsulfid, Metallpulver sowie Glasfasern.

<u>Beispiel</u> gemäß deutscher Patentanmeldung P 35 06 472.2 (Le A 23 654)

Die Bestimmung des Siloxangehaltes, d.h. des Anteils der Dimethylsiloxan-Einheiten in Gew.-%, bezogen auf das Gesamtgewicht des Blockcopolymeren, erfolgte durch Kernresonanzspektrometrie. Als mittlere Siloxanblocklänge wird der durch Bestimmung der Endgruppen am Ausgangsmaterial Polysiloxan ermittelte Polymerisationsgrad n angegeben.

Die relative Lösungsviskosität wurde bei 25° C und einer Konzentration von 5 g/l in Dichlormethan gemessen.

Die Izod-Kerbschlagzähigkeit wurde an Prüfkörpern von 3,2 mm bzw. 6,4 mm Breite in Anlehnung an ASTM D 256 bestimmt.

Die Wärmeformbeständigkeit wurde nach Methode Vicat (VST/B/120) gemäß DIN 53 460/ISO 368 ermittelt.

Die Entformungskraft wurde auf einem Hülsenwerkzeug bestimmt.

1. Herstellung von Polydimethylsiloxan mit Bisphenol A-Endgruppen

   In ein Gefäß, das mit Kühler, Thermometer, Tropftrichter und Rührer versehen ist, gibt man 19,2 Gew.-Teile Bisphenol A und 1800 Gew.-Teile Chlorbenzol. Es wird auf 100° C erwärmt und mit 11,6 Gew.-Teilen Kaliumcarbonat versetzt. Danach gibt

man zu der Mischung unter Rückfluß über eine Zeit von 15 Minuten eine Lösung von 178 Gew.-Teilen α,ω-Bisacetoxypolydimethylsiloxan, $\bar{P}_n$ = 84, in 178 Gew.-Teilen Chlorbenzol, wobei das Rühren für zwei weitere Stunden fortgesetzt wird. Es wird auf etwa 80° C abgekühlt und noch heiß filtriert.

2. Herstellung von Polydimethylsiloxan-Polycarbonat-Blockcopolymer

Die unter 1 beschriebene Lösung von Polydimethylsiloxan mit Bisphenol A-Endgruppen wird in einem Reaktionskolben, der mit Rührer, Phosgeneinlaßrohr, Rückflußkühler, Innenthermometer und Tropftrichter ausgerüstet ist, mit 3035 Gew.-Teilen Bisphenol A, 3024 Gew.-Teilen Natriumhydroxid, 34 700 Gew.-Teilen Wasser, 17 800 Gew.-Teilen Dichlormethan und 13 100 Gew.-Teilen Chlorbenzol und 164,7 Gew.-Teilen 4-(1,1,3,3-Tetramethylbutyl)-phenol versetzt. Bei Raumtemperatur werden 2216 Gew.-Teile Phosgen eingeleitet, wobei der pH durch Zugabe 45 %iger Natronlauge zwischen 12 und 13 gehalten wird. Das Einleiten nimmt ca. eine Stunde in Anspruch. Danach werden 11 Gew.-Teile Triethylamin zugesetzt und weitere 45 Minuten bei pH 12 bis 13 nachgerührt. Das Cokondensat wird nach für Polycarbonat gängigen Methoden aufgearbeitet.

| Eigenschaften | | Beispiel |
|---|---|---|
| rel. Lösungsviskosität | | 1,200 |
| Siloxangehalt (%) | | 5,3 |
| Siloxanblocklänge (n) | | 84 |
| Schmelzenviskosität bei $300^{0}C/10^{3}\ s^{-1}$ Pa.s | | 113 |
| Kerbschlagzähigkeit nach Izod (3.2 mm) | | |
| RT | J/m | 557* (*Zähbruch) |
| $-40^{0}C$ | J/m | 381* |
| krit. Temp. | °C | unter -40 |
| Kerbschlagzähigkeit nach Izod (6.4 mm) | | |
| RT | J/m | 391* |
| $0^{0}C$ | J/m | 7x355*/3x320 |
| krit. Temp. | °C | 0 |
| Wärmeformbeständigkeit Vicat (VST/B/120) °C | | 141 |
| Entformungskraft bei 136°C Formtemp./ 300°C Massetemp. | bar | 5 |

Die Komponente (A) kann auch aus einer Mischung von Polydiorganosiloxan-Polycarbonat-Blockcopolymeren mit anderen, polysiloxanfreien, thermoplastischen Polycarbonaten bestehen, deren Gewichtsmittelmolekulargewichte $\bar{M}w$ jeweils wieder von 10000 bis 30000, vorzugsweise von 15000 bis 25000 ($\bar{M}w$ ermittelt in bekannter Weise durch Ultrazentrifugation oder Streulichtmessung) liegen, und wobei der Gehalt der Polycarbonatmischung an Polydiorganosiloxanstruktureinheiten wieder zwischen 10 Gew.-% und 0,5 Gew.-%, vorzugsweise zwischen 7 Gew.-% und 1 Gew.-%, bezogen jeweils auf Gesamtgewicht der Polycarbonatmischung, liegt, und wobei alle Polycarbonate der Mischung wiederum Monoalkylphenyl- oder Dialkylphenyl-Endgruppen mit insgesamt 8 bis 20 C-Atomen in den Alkylsubstituenten, vorzugsweise Monoalkylphenyl-Endgruppen der Formel (IIIa)

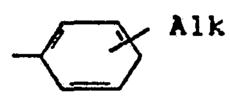

(IIIa)

worin

Alk ein linearer oder verzweigter Alkylrest mit 8 bis 15 C-Atomen ist, haben.

Zur Herstellung derartiger Polycarbonatgemische sind auch solche Polydiorganosiloxan-Polycarbonat-Blockcopolymere geeignet, deren Gehalt an Poly(diorganosiloxan)-Struktureinheiten über 10 Gew.-%, vorzugsweise bei 40 Gew.-% bis 60 Gew.-% liegt, und deren $\bar{M}w$ zwischen 15000 und 60 000 liegen kann.

Die Herstellung derartiger Polydiorganosiloxan-Polycarbonat-Blockcopolymeren erfolgt in Analogie zur Herstellung derjenigen Blockcopolymeren mit Gehalten von 10 Gew.-% bis 0,5 Gew.-% an Poly(diorganosiloxan)-Struktureinheiten gemäß unserer oben ausgeführten deutschen Patentanmeldung P 35 06 472.2 (Le A 23 654).

Die kautschukelastischen Polymerisate (B) umfassen Copolymerisate - insbesondere Pfropfcopolymerisate - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat, (Meth-) Acrylsäureester mit 1 bis 18 C-Atomen in der Alkoholkomponente und Kohlenmonoxid, also Polymerisate, wie sie z.B. in "Methoden der organischen Chemie", (Houben-Weyl), Bd. 14/1, Georg Thieme Verlag, Stuttgart 1961, S. 393-406, und in C.B. Bucknall, "Toughened Plastics", Appl. Science Publishers, London 1977, beschrieben sind. Bevorzugte Polymerisate gemäß Komponente (B) besitzen einen Gelgehalt von über 20, vorzugsweise über 40 Gew.-%.

Bevorzugte Polymerisate gemäß Komponente (B) sind Ethylen/Vinylacetat-Copolymerisate mit 15-70 Gew.-% Vinylacetat und Schmelzindices von nicht fließfähig bis 1.000, vorzugsweise 0,1-20, gemessen bei 190° C und

und 2,16 kp Belastung nach DIN 53 753. Weiterhin bevorzugt sind Terpolymerisate aus Ethylen, Acrylsäurealkylester bzw. Vinylacetat und Kohlenmonoxid.

Bevorzugte genannte Polymerisate gemäß Komponente (B) sind z.B. die sogenannten EPM- bzw. EPDM-Kautschuke, in denen das Gewichtsverhältnis von Ethylen- zu Propylenresten im Bereich von 40:60 bis 90:10, vorzugsweise 40:60 bis 65:35, liegt.

Die Mooney-Viskositäten (ML 1+4/100°C gemäß DIN 53 523) der unvernetzten EPM- bzw. EPDM-Kautschuke liegt zwischen 25 und 100 ME, vorzugsweise zwischen 35 und 90 ME. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1-20 Doppelbindungen/1.000 C-Atome aufweisen können. Als geeignete Dien-Monomere in EPDM seien beispielsweise genannt konjugierte Diene, z.B. Isopren und Butadien, und nichtkonjugierte Diene mit 5-25 C-Atomen, z.B. 1,4-Pentadien, 1,4-Hexadien, 1,5-Hexadien, 2,5-Dimethyl-1,5-hexadien und 1,4-Octadien, cyclische Diene, z.B. Cyclopentadien, Cyclohexadien, Cyclooctadien und Dicyclopentadien, Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo(5,2,1,0,2,6)-3,8-decadien. Bevorzugt seien die nichtkonjugierten Diene Hexadien-1,5,

Ethylidennorbornen oder Dicyclopentadien angeführt. Der Diengehalt im EPDM beträgt vorzugsweise 0,5 bis 10 Gew.-%.

Derartige EPM- bzw. EPDM-Kautschuke sind z.B. in der DE-OS 28 08 709 (Le A 18 705) beschrieben.

Bevorzugte Polymerisate gemäß Komponente (B) sind auch gegebenenfalls selektiv hydrierte Blockcopolymerisate eines vinylaromatischen Monomeren X und eines konjugierten Diens Y vom X-Y-Typ oder $X-(Y-X)_r$-Typ (mit r = 1-5) oder $Y-(X)_s$-Typ (mit s = 3-5).

Diese Blockcopolymerisate können nach bekannten Verfahren hergestellt werden. Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dienblockcopolymerisaten verwendete Technologie benutzt werden, die in "Encyclopedia of Polymer Science and Technology", Bd. 15, Interscience, N.Y. (1971), auf den Seiten 508 ff. beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockpolymerisate werden z.B. in der DE-OS 3 000 282 beschrieben.

Bevorzugte Polymerisate gemäß Komponente (B) sind z.B.

mit Styrol und/oder Acrylnitril und/oder (Meth)-Acrylsäureestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- odr Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate gemäß Komponente (B) sind z.B. Pfropfpolymerisate, die durch Pfropfreaktion von

I. 10-40, vorzugsweise 10-35, insbesondere 15-25 Gew.-%, bezogen auf Pfropfprodukt, mindestens eines (Meth-)Acrylsäureesters und/oder eines Gemisches aus

10-35, vorzugsweise 20-35 Gew.-%, bezogen auf Gemisch, Acrylnitril und

65-90, vorzugsweise 65-80 Gew.-%, bezogen auf Gemisch, Styrol auf

II. 60-90, vorzugsweise 65-90, insbesondere 75-85 Gew.-%, bezogen auf Pfropfprodukt, eines Butadien-Polymerisats mit mindestens 70 Gew.-%, bezogen auf II, Butadienresten als Pfropfgrundlage

erhältlich sind, wobei vorzugsweise der Gelanteil der Pfropfgrundlage II ≥ 70 % (in Toluol gemessen), der Pfropfgrad g 0,15 bis 0,55 und der mittlere Teilchendurchmesser $d_{50}$ des Pfropfpolymerisats 0,2-0,6, vorzugsweise 0,3-0,5 µm betragen.

(Meth-)Acrylsäureester I sind Ester der Acrylsäure bzw. Methacrylsäure und einwertiger Alkohole mit 1-18 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1-4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I üblicherweise nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten. Pfropfpolymerisate im Sinne der Erfindung sind solche, die durch Pfropfpolymerisation von Vinylmonomeren in Gegenwart eines Polymerisats II erhalten werden.

Die mittlere Teilchengröße $d_{50}$ ist der Durchmesser, oberhalb und unterhalb dessen jeweils 50 Gew.-% der Teilchen liegen. Er kann bestimmt werden mittels

Ultrazentrifugenmessungen (W. Scholtan, H. Lange, Kolloid. Z. und Z. Polymere 250 (1972), 782-796) oder mittels Elektronenmikroskopie und anschließende Teilchenauszählung (G. Kämpf, H. Schuster, Angew. Makromolekulare Chemie 14, (1970), 111-129) oder mittels Lichtstreuungsmessungen.

Besonders bevorzugte Polymerisate gemäß Komponente (B) sind z.B. auch Pfropfpolymerisate aus

III. 25-98 Gew.-%, bezogen auf Komponente (B), Acrylatkautschuk mit einer Glasübergangstemperatur unter -20°C als Pfropfgrundlage und

IV. 2-75 Gew.-%, bezogen auf Komponente (B), mindestens eines polymerisierbaren ethylenisch ungesättigten Monomeren, dessen bzw. deren in Abwesenheit von III entstandenen Homo- bzw. Copolymerisate eine Glasübergangstemperatur über 25°C hätten, als Pfropfmonomere.

Die Acrylatkautschuke III der Polymerisate gemäß Komponente (B) sind vorzugsweise Polymerisate aus Acrylsäurealkylester, gegebenenfalls mit bis zu 40 Gew.-% anderer polymerisierbarer ethylenisch ungesättigter Monomerer. Sofern die als Pfropfgrundlage III eingesetzten Acrylatkautschuke - wie auf Seite 24 beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester,

beispielsweise Methyl-, Ethyl-, Butyl-, Octyl- und 2-Ethylhexylester, Halogenalkylester, vorzugsweise Halogen-$C_1$-$C_8$-alkylester, wie Chlorethylacrylat, und aromatische Ester wie Benzylacrylat und Phenethylacrylat. Sie können einzeln oder in Mischung eingesetzt werden.

Die Acrylatkautschuke III können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen,wie z.B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzol; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05-2 Gew.-%, bezogen auf Pfropfgrundlage III.

Bei cyclischen vernetzenden Monomeren mit mindestens 3 ethylenisch ungesättigten Gruppen ist es vorteilhaft, die Menge auf 1 Gew.-% der Pfropfgrundlage III zu beschränken.

Bevorzugte "andere" polymerisierbare ethylenisch ungesättigte Monomere, die neben den Acrylsäureestern gegebenenfalls zur Herstellung der Pfropfgrundlage III dienen können, sind z.B. Acrylnitril, Styrol, α-Methylstyrol, Acrylamide, Vinyl-$C_1$-$C_6$-alkylether, Butadien, Isopren. Bevorzugte Acrylatkautschuke als Pfropfgrundlage III sind Emulsionspolymerisate, die einen Gelgehalt von 60 Gew.-% aufweisen.

Der Gelgehalt der Pfropfgrundlage III wird bei 25°C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage III können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil der Polydien-Kerne in der Pfropfgrundlage III

kann 0,1 bis 80, bevorzugt 10-50 Gew.-%, bezogen auf III, betragen. Schale und Kern können unabhängig voneinander unvernetzt, teilvernetzt oder hochvernetzt sein.

Besonders bevorzugte Pfropfgrundlagen III für Pfropfpolymerisate gemäß Komponente (B) auf Basis von Polyacrylsäureestern seien nachfolgend zusammengefaßt:

1. Acrylsäureesterpolymerisate und -copolymerisate ohne Dienkautschukkern und

2. Acrylsäureesterpolymerisate und -copolymerisate, die einen Dienkautschukkern enthalten.

Die Pfropfausbeute, d.h. der Quotient aus der Menge des aufgepfropften Monomeren IV und der Menge des eingesetzten Pfropfmonomeren IV, beträgt in der Regel 20 bis 80 Gew.-%. Die Bestimmung kann wie bei M. Hoffmann, H. Krömer, R. Kuhn, Polymeranalytik, Bd. 1, Georg Thieme Verlag, Stuttgart 1977, beschrieben, erfolgen.

Bevorzugte Pfropfmonomere IV sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90:10 bis 50:50.

Solche Pfropfpolymerisate gemäß Komponente (B) auf Basis von Polyacrylsäureestern werden z.B. in der DE-AS 2 444 584 (= US-PS 4 022 748) und in der DE-OS 2 726 256 (= US-PS 4 096 202) beschrieben.

Besonders vorteilhafte Pfropfpolymerisate dieser Art erhält man, wenn man 2-20, vorzugsweise 2-15 Gew.-%, bezogen auf (B), Monomer IV auf 80-98, vorzugsweise 85-95 Gew.-%, bezogen auf (B), des vollständig gebrochenen und in Wasser aufgeschlämmten Latex von III in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von Komponente (B) in der erfindungsgemäßen Mischung 0,05-3, vorzugsweise 0,1-2, insbesondere 0,2-1 µm beträgt.

Der Begriff "in Abwesenheit von Suspendiermittel" bedeutet die Anwesenheit von Stoffen, die nach Art und Menge die Pfropfmonomeren IV in der wäßrigen Phase suspendieren könnten. Die Definition schließt die Anwesenheit von Stoffen nicht aus, die z.B. bei der Herstellung einer gepfropften Pfropfgrundlage III suspendierend gewirkt haben, in derartigen Fällen muß das Koagulations- oder Fällungsmittel, das zum Brechen des Latex III eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren IV in der wäßrigen Phase keine (stabile) Emulsion oder Dispersion ergeben.

Ein derart in Abwesenheit von Suspendiermittel hergestelltes Pfropfpolymerisat gemäß Komponente (B) ist als Bestandteil der erfindungsgemäßen Formmassen in den

anderen Harzkomponenten zu einer außergewöhnlich niedrigen Teilchengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetzenden Pfropfpolymerisatteilchen mit Anzahl, Form und Größe der in die geschmolzenen anderen Harzkomponenten eingebrachten Pfropfpolymerisatteilchen auch nach dem Homogenisieren im wesentlichen noch übereinstimmen.

Als Pfropfgrundlage III können auch solche Acrylatkautschuke verwendet werden, die als wäßrige Emulsion (Latex) anfallen und deren Latexpartikel 1-20 Gew.-%, vorzugsweise 1-10 Gew.-%, bezogen auf III, bereits in wäßriger Emulsion aufgepfropfte Monomere enthalten, deren Homo- bzw. Copolymerisate Glastemperaturen $>0^{o}C$ aufweisen würden.

Bevorzugte derartige aufgepfropfte Monomere sind Alkylacrylate, Alkylmethacrylate, Styrol, Acrylnitril, $\alpha$-Methylstyrol und/oder Vinylacetat.

Derartige Pfropfgrundlagen III werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlagen III für Acrylatkautschuke dieser besonderen Ausführungsform eignen sich also vorzugsweise neben den auf Seite 24 aufgezählten Polymerisaten auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten, polymerisierbaren Monomeren.

Polyalkylenterephthalate gemäß Komponente (C) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen dieser Reaktionsprodukte.

Bevorzugte Polyalkylenterephthalate gemäß Komponente (C) lassen sich aus Terephthalsäure (oder ihren reaktionsfähigen Derivaten) und aliphatischen oder cycloaliphatischen Diolen mit 2-10 C-Atomen nach bekannten Methoden herstellen (Kunststoff-Handbuch, Bd. VIII, S. 695 ff, Carl Hanser Verlag, München 1973).

Bevorzugte Polyalkylenterephthalate gemäß Komponente (C) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (C) können neben Terephthalsäureresten bis zu 20 Mol-% Reste anderer

aromatischer Dicarbonsäuren mit 4-12 C-Atomen oder aliphatischer Dicarbonsäuren mit 4-12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate (C) können neben Ethylenglykol- bzw. Butandiol-1,4-Resten bis zu 20 Mol-% anderer aliphatischer Diole mit 3-12 C-Atomen oder cycloaliphatischer Diole mit 6-21 C-Atomen enthalten, z.B. Reste von Propandiol-1,3, 2-Ethylpropandiol-1,3, Neopentylglykol, Pentan-diol-1,5, Hexandiol-1,6, Cyclohexandi-methanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,4, Hexandiol-2,5, 1,4-Di-(β-hydroxyethoxy)-benzol, 2,2-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate gemäß Komponente (C) können durch Einbau relativ kleiner Mengen 3- oder 4-wertiger Alkohole oder 3- oder 4-basiger Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate (C) die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate (C) sind auch Copolyester, die aus mindestens zwei der obengenannten Alkoholkomponenten hergestellt sind; besonders bevorzugte Copolyester sind Poly-(ethylenglykol/butandiol-1,4)-terephthalate.

Die als Komponente (C) vorzugsweise verwendeten Polyalkylenterephthalate besitzen im allgemeinen eine Intrinsic-Viskosität von 0,4-1,8 dl/g, vorzugsweise 0,5-1,5 dl/g, insbesondere 0,6-1,3 dl/g, jeweils gemessen in Phenol/o-Dichlorbenzol (1:1 Gew.-Tl.) bei 25° C.

Mischungen aus Polycarbonaten und Polymerisaten sind bekannt (siehe beispielsweise japanische Patentpublikation Nr. 18 611/68 (Teijin, Priorität 30.06.65), US-PS 3 663 471 (Le A 11 969), US-PS 3 437 631 (Mo 936), US-PS 4 299 928 (Mo 2062) oder DE-OS 3 114 494).

Gegenüber reinem Polycarbonat weisen solche Mischungen ein verbessertes Zähigkeitsverhalten auf.

Thermoplastische Formmassen auf Basis von Polydiorganosiloxan-Polycarbonat-Blockcopolymeren und Polyalkylenterephthalaten sind bekannt; vgl. z.B. US-PS 4 161 469

und US-PS 4 161 498. Sie sollen sich durch verbesserte Schlagzähigkeit und Wärmeformbeständigkeit auszeichnen.

Aus der EP-OS 0 105 388 sind Mischungen aus Siloxan-Polycarbonat-Blockcopolymeren, Polyestern von Diolen mit aromatischen Dicarbonsäuren und kautschukartigen Vinylpolymeren bekannt, die sich durch verbesserte Kerbschlagzähigkeit auszeichnen.

Der Zusatz von Organopolysiloxan-Polycarbonatpolymeren als schlagzähigkeitsverbessernde Komponente für Mischungen aus aromatischem Polycarbonat und einem Polystyrolharz ist gemäß DE-OS 2 434 085 bekannt, wobei die verwendeten Organosiloxan-Polycarbonatpolymere die der US 3 189 662 sind.

Organosiloxan-Polycarbonatpolymere gemäß US 3 189 662 unterscheiden sich von den erfindungsgemäßen Polydiorganosiloxan-Polycarbonat-Blockcopolymeren dadurch, daß sie hergestellt werden durch Phosgenierung bis zur maximalen Viskosität.

Aus der EP-OS 0 073 067 sind Mischungen aus aromatischen Polyestern, Siloxan-Polycarbonat-Blockcopolymeren, Polyestern von Diolen mit aromatischen Dicarbonsäuren und thermoplastischen Styrolharzen oder thermoplastischen Alkylacrylatharzen bekannt, die sich gegenüber den aromatischen Polyestern durch verbesserte Kerbschlagzähigkeit auszeichnen.

Aus der US-PS 4 117 027 sind Polysiloxan-Polycarbonat-Blockcopolymere mit einem Gehalt an Klebstoffen bekannt, wobei als Klebstoffe unter anderem Copolymere von Vinyltoluol und α-Methylstyrol genannt sind. Die bevorzugten Molekulargewichte dieser Klebstoffe sind zwischen 500 und 2000; die Klebstoffe der US-PS 4117027 sind unseres Erachtens nicht kautschuk-elastisch.

Erwähnt sei noch, daß von den literaturbekannten Polydiorganosiloxan-Polycarbonat-Blockcopolymeren in der einschlägigen Literatur ihre verbesserten mechanischen Eigenschaften bei tiefen Temperaturen beschrieben werden (z.B. B.M. Beach, R.P. Kambour und A.R. Schultz, J. Polym. Sci., Polym. Lett. Ed. 12, 247 (1974)).

Obwohl die genannten Formmassen viele positive Eigenschaften besitzen, werden sie manchen speziellen Anforderungen nicht gerecht, wie sie z.B. für Geräteteile im Motorraum von Kraftfahrzeugen erhoben werden, als da sind Wärmeformbeständigkeit, Verzugsfreiheit, Benzinbeständigkeit, hohe Zähigkeit bzw. zugleich guten Fließ- und Entformungsverhalten.

Überraschenderweise wurde nun gefunden, daß Abmischungen aus speziellem Polydiorganosiloxan-Polycarbonat-Blockcopolymer mit Alkylphenyl-Endgruppen und kautschukelastischem Polymerisat mit unter -20°C liegender Glasübergangstemperatur bei ausgezeichnetem Fließ- und Entformungsverhalten außerdem einen deutlich zu tieferen Temperaturen verschobenen Zäh-Spröd-Übergang zeigen.

Wird eine besonders hohe Benzinbeständigkeit bei ansonsten gleichbleibendem Eigenschaftsbild gefordert, ist ein Zusatz von Polyalkylenterephthalat angezeigt.

Zur weiteren Erhöhung der Benzinfestigkeit der erfindungsgemäßen Abmischungen, enthaltend die Komponenten (A), (B) und gegebenenfalls (C), können zusätzlich bis zu 5 Gew.-%, bezogen auf das Gesamtgewicht aus den Komponenten (A) und (B) und gegebenenfalls (C), Ethylenhomo- bzw. -copolymerisate zugesetzt werden. Ethylencopolymerisate in diesem Sinne sind Polyethylene, deren Reste neben Ethylenresten bis zu 30 Gew.-%, bezogen jeweils auf Ethylencopolymerisat, aus Resten anderer copolymerisierbarer Monomerer, wie etwa (Meth)-Acrylsäure, bestehen.

Die erfindungsgemäßen Formmassen auf Basis der Komponenten (A), (B) und gegebenenfalls (C) können die in der Polycarbonatchemie und Kautschukchemie und Polyesterchemie üblichen Additive, wie Nukleiermittel, Stabilisatoren, Füll- und Verstärkungsstoffe, Farbstoffe sowie Flammschutzmittel enthalten.

Die gefüllten bzw. verstärkten Formmassen auf Basis der Komponenten (A), (B) und gegebenenfalls (C) können bis zu 40 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Formmassen auf Basis der Komponenten (A) und (B) und gegebenenfalls (C) können Flammschutzmittel in einer Konzentration von im allgemeinen weniger als 30 Gew.-%, bezogen auf die

flammgeschützten Formmassen enthalten. Es kommen alle für Polyester-Formmassen bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem können Synergisten, wie z.B. Antimontrioxid mitverwendet werden.

Die Herstellung der erfindungsgemäßen Formmassen auf Basis der Komponenten (A), (B) und gegebenenfalls (C) kann in den üblichen Mischaggregaten, wie Walzen, Knetern, Ein- und Mehrwellenextrudern, erfolgen. Die erfindungsgemäßen Formmassen auf Basis der Komponenten (A), (B) und gegebenenfalls (C) lassen sich zu Formkörpern verarbeiten, die auch bei längerer Temperaturbelastung einen außerordentlich geringen Verzug aufweisen. Wenn auch in den meisten Fällen die Harzkomponenten (A), (B) und (C) zweckmäßigerweise in einem einzigen Schritt gemischt werden, kann es manchmal auch empfehlenswert sein, zuerst eine Komponente wegzulassen und erst zu einem späteren Zeitpunkt zuzumischen.

Die erfindungsgemäßen thermoplastischen Formmassen sind einsetzbar beispielsweise für Karosserieteile wie Stoßfänger und Flankenschutzteile.

Beispiele

Eingesetzte Komponenten (A), (B) und(C).

Komponente (A1)
Polydimethylsiloxan-Polycarbonat-Blockcopolymer.

1. In ein Gefäß, das mit Kühler, Thermometer, Tropftrichter und Rührer versehen ist, gibt man 19,2 Gew.-Teile Bisphenol A und 1800 Gew.-Teile Chlorbenzol. Es wird auf 100° C erwärmt und mit 11,6 Gew.-Teilen Kaliumcarbonat versetzt. Danach gibt man zu der Mischung unter Rückfluß über eine Zeit von 15 Minuten eine Lösung von 178 Gew.-Teilen α,ω-Bisacetoxypolydimethylsiloxan, $P_n$ = 84, in 178 Gew.-Teilen Chlorbenzol, wobei das Rühren für zwei weitere Stunden fortgesetzt wird. Es wird auf etwa 80° C abgekühlt und noch heiß filtriert.

2. Die unter 1 beschriebene Lösung von Polydimethylsiloxan mit Bisphenol A-Endgruppen wird in einem Reaktionskolben, der mit Rührer, Phosgeneinlaßrohr, Rückflußkühler, Innenthermometer und Tropftrichter ausgerüstet ist, mit 3035 Gew.-Teilen Bisphenol A, 3024 Gew.-Teilen Natriumhydroxid, 34 700 Gew.-Teilen Wasser, 17 800 Gew.-Teilen Dichlormethan und 13 100 Gew.-Teilen Chlorbenzol und 164,7 Gew.-Teilen 4-(1,1,3,3-Tetramethylbutyl)-phenol versetzt. Bei Raumtemperatur werden 2216 Gew.-Teile Phosgen eingeleitet, wobei der pH durch Zugabe 45 %iger Natronlauge zwischen 12 und 13 gehalten wird. Das Einleiten nimmt ca. eine Stunde in Anspruch. Danach werden 11 Gew.-Teile Triethylamin zugesetzt und

weitere 45 Minuten bei pH 12 bis 13 nachgerührt. Das Cokondensat wird nach für Polycarbonat gängigen Methoden aufgearbeitet.

Die Bestimmung des Siloxangehaltes, d.h. des Anteils der Dimethylsiloxan-Einheiten in Gew.-%, bezogen auf das Gesamtgewicht des Blockcopolymeren, erfolgte durch Kernresonanzspektrometrie. Als mittlere Siloxanblocklänge wird der durch Bestimmung der Endgruppen am Ausgangsmaterial Polysiloxan ermittelte Polymerisationsgrad n angegeben.

Die relative Lösungsviskosität wurde bei 25°C und einer Konzentration von 5 g/l in Dichlormethan gemessen.

Die relative Lösungsviskosität beträgt 1.200; der Siloxangehalt beträgt 5,3 Gew.-%.

Komponente (A2)

Das Herstellungsverfahren für (A1) wird wiederholt, mit der Ausnahme, daß die Menge des Kettenabbrechers, nämlich des 4-(1,1,3,3-Tetramethylbutyl)-phenols 125,5 Gew.-Teile beträgt.

Die relative Lösungsviskosität, gemessen wie für (A1), beträgt 1.248; der Siloxangehalt beträgt 4,9 Gew.-%.

Komponente (B1)

Pfropfpolymerisat aus 80 Gew.-% Pfropfgrundlage aus vernetztem Polybutadien (Gelgehalt über 70 Gew.-%, gemessen in Toluol) und 20 Gew.-% Pfropfauflage aus Methylmethacrylat, wobei der mittlere Teilchendurchmesser, der in Latexform vorliegenden Pfropfgrundlage, zwischen 0,3 und 0,4 µm liegt.

Komponente (B2)

Blockcopolymer vom Typ Styrol-Ethylen-Butylen-Styrol, hergestellt aus Buadien und Styrol mit anschließender Hydrierung; mit einem Gehalt von 24,5 Gew.-% Styrol, 46,2 Gew.-% Ethylen und 29,3 Gew.-% Butylen und einer Brookfield Viskosität von 2,0 Pa.s und einer Dichte von 0,92 g/cm$^3$. Brookfield Viskosität siehe H. Elias, "Makromoleküle", Seite 229 ff, 4. Auflage, Hüthig und Wepf-Verlag, Basel und Heidelberg, 1981. (Kraton® G 1651, Handelsprodukt der Fa. Shell).

Komponente (C)

Polybutylenterephthalat mit einer Intrinsic-Viskosität von 1,25 dl/g, gemessen in Phenol/o-Dichlorbenzol (1:1) bei 25° C.

Die Herstellung der Formmassen auf Basis der Komponenten (A), (B) und gegebenenfalls (C) erfolgte durch Aufschmelzen und Homogenisieren auf einem geeigneten Aggregat. Die Verarbeitung erfolgte auf einer Spritzgußmaschine.

In den Vergleichsbeispielen werden anstelle der Komponenten (A1) beziehungsweise (A2) die folgenden Polycarbonate (A3) und (A4) ohne Siloxangehalt, aber mit den gleichen Endgruppen, nämlich mit 4-(1,1,3,3-Tetramethylbutyl)-phenyl-Endgruppen eingesetzt.

Polycarbonat (A3) ist eine Bisphenol-A-Homopolycarbonat mit $\eta_{rel}$ 1.200 (gemessen wie für (A1) beschrieben), und in bekannter Weise hergestellt gemäß DE-OS 2 842 005 (Le A 19 006).

Polycarbonat (A4) entspricht dem Polycarbonat (A3), jedoch mit einem $\eta_{rel}$ (gemessen wie für (A1) beschrieben) von 1.250.

Tabelle 1

| | Dimension | Beisp.1 (Vergleich) | Beisp.2 (Vergleich) | Beisp.3 | Beisp.4 |
|---|---|---|---|---|---|
| Komponente $A_1$ | % | - | - | 53,9 | - |
| " $A_2$ | % | - | - | - | 53,9 |
| " $A_3$ | % | 53,9 | - | - | - |
| " $A_4$ | % | - | 53,9 | - | - |
| " $B_1$ | % | 10 | 10 | 10 | 10 |
| " C | % | 36 | 36 | 36 | 36 |
| Thermostabilisator 1) | % | 0,1 | 0,1 | 0,1 | 0,1 |
| Schmelzviskosität bei $260^0 C/10^3 s^{-1}$ | Pa.s | 166 | 228 | 159 | 248 |

Tabelle 1 (Fortsetzung)

| | Dimension | Beisp.1 (Vergleich) | Beisp.2 (Vergleich) | Beisp.3 | Beisp.4 |
|---|---|---|---|---|---|
| Kerbschlagzähigkeit[2)] nach Izod (3,2 mm) | | | | | |
| RT | J/m | 676* | 820* | 788* | 829* |
| $0^{0}$ C | " | 5x505*/5x251 | - | 666* | - |
| $-10^{0}$ C | " | - | - | 570* | - |
| $-20^{0}$ C | " | 187 | 593* | 268 | 668* |
| $-30^{0}$ C | " | - | 306 | - | 602* |
| $-40^{0}$ C | " | - | - | - | 324 |
| Kritische Temperatur[3)] | °C | 0 | -20/-30 | -10/-20 | -30/-40 |
| Wärmeformbeständigkeit[2)] | °C | 110 | 115 | 109 | 115 |

(*= Zähbruch)

1) Tris(3-ethyl-oxetanyl-3-methyl)-phosphit

2) Zur Bestimmung s.S. 12

3) Zäh-Spröd-Übergang bei entsprechender Prüfkörperbreite

Tabelle 2

| | Dimension | Beispiel 5 (Vergleich) | Beispiel 6 |
|---|---|---|---|
| Komponente $A_2$ | % | - | 98 |
| " $A_4$ | " | 98 | - |
| " $B_2$ | " | 2 | 2 |
| Schmelzviskosität bei $300^0 C/10^3 s^{-1}$ | Pa.s | 198 | 215 |
| Kerbschlagzähigkeit[1] nach Izod (3,2 mm) | | | |
| RT | J/m | 745* | 823* |
| $0^0$ C | " | 718* | - |
| $-10^0$ C | " | 6 x 689*/3 x 240 | - |
| $-20^0$ C | " | 210 | - |
| $-30^0$ C | " | 172 | - |
| $-40^0$ C | " | 134 | 678* |
| kritische Temperatur[2] | $^0$C | ca. -10 | <-40 |

Tabelle 2 (Fortsetzung)

| | Dimension | Beispiel 5 (Vergleich) | Beispiel 6 |
|---|---|---|---|
| Kerbschlagzähigkeit[1) ] nach Izod (6,4 mm) | | | |
| RT | J/m | 8 x 627*/2 x 297 | 605* |
| $0^{\circ}$ C | " | 194 | - |
| $-10^{\circ}$ C | " | 160 | - |
| $-20^{\circ}$ C | " | 144 | 528* |
| $-30^{\circ}$ C | " | 132 | 2x373*/8x320 |
| $-40^{\circ}$ C | " | 109 | 239 |
| kritische Temperatur[2)] | °C | ca. RT | -30 |
| Wärmeformbeständigkeit[1)] | °C | 147 | 146 |

*) Zähbruch

1) Zur Bestimmung s. S. 12

2) Zäh-Spröd-Übergang bei entsprechender Prüfkörperbreite

## Patentansprüche

1. Thermoplastische Formmassen enthaltend

(A) 30 bis 98 Gew.-Teile eines Polydiorganosiloxan-Polycarbonat-Blockcopolymers mit mittleren Molekulargewichten $\bar{M}w$ von 10 000 bis 30 000, ($\bar{M}w$ ermittelt in bekannter Weise durch Ultrazentrifugation oder Streulichtmessung) und mit einem Gehalt an Poly(diorganosiloxan)-Struktureinheiten zwischen 10 Gew.-% und 0,5 Gew.-%, bezogen jeweils auf Gesamtgewicht des Blockcopolymeren, wobei die Blockcopolymeren, ausgehend von α,ω-Bishydroxyaryloxyendgruppenhaltigen Polydiorganosiloxanen mit einem Polymerisationsgrad $\bar{P}n$ zwischen 5 und 100, unter Mitverwendung von Kettenabbrechern hergestellt werden,

(B) 1 bis 30, eines kautschukelastischen Polymerisats mit einer Glasübergangstemperatur von unter -20° C und

(C) 0 bis 50 Gew.-Teile eines thermoplastischen Polyalkylenterephthalats, wobei die Summe der Gewichtsteile der Komponenten (A) + (B) + (C) jeweils 100 Gew.-Teile beträgt,

die dadurch gekennzeichnet sind, daß die Komponente (A) unter Verwendung von Monoalkylphenolen oder

Dialkylphenolen mit insgesamt 8 bis 20 C-Atomen in den Alkylsubstituenten, als Kettenabbrecher nach dem Phasengrenzflächenverfahren hergestellt ist.

2. Formmassen gemäß Anspruch 1, dadurch gekennzeichnet, daß die Komponente (A) unter Verwendung von Phenolen der Formel (III)

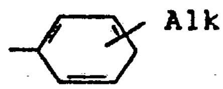

(III)

worin Alk einen linearen oder verzweigten Alkylrest mit 8 bis 15 C-Atomen darstellt, als Kettenabbrecher nach dem Phasengrenzflächenverfahren hergestellt ist.

3. Formmassen gemäß Anspruch 1, dadurch gekennzeichnet, daß die Komponente (A) eine Mischung von Polydiorganosiloxan-Polycarbonat-Blockcopolymeren mit anderen, siloxanfreien, thermoplastischen Polycarbonaten ist.

4. Thermoplastische Formmassen gemäß Ansprüche 1 bis 3, enthaltend zusätzlich bis zu 5 Gew.-%, bezogen auf das Gesamtgewicht aus den Komponenten (A) und (B) und gegebenenfalls (C), Ethylenhomo- bzw. copolymerisate, deren Reste bis zu 30 Gew.-%, bezogen

jeweils auf Ethylencopolymerisat, aus Resten anderer copolymerisierbarer Monomerer bestehen.

5. Thermoplastische Formmassen gemäß Ansprüche 1 bis 3, bestehend aus den Komponenten (A) und (B) und gegebenenfalls (C), sowie Nukleiermitteln, Stabilisatoren, Füllstoffen, Verstärkungsstoffen, Farbstoffen und/oder Flammschutzmitteln.

6. Thermoplastische Formmassen gemäß Anspruch 4, bestehend aus den Komponenten (A) und (B), gegebenenfalls (C), Ethylenhomo- bzw.-copolymerisaten, deren Reste bis zu 30 Gew.-%, bezogen jeweils auf Ethylencopolymerisat, aus Resten anderer copolymerisierbarer Monomerer bestehen, sowie Nukleiermitteln, Stabilisatoren, Füllstoffen, Verstärkungsstoffen, Farbstoffen und/oder Flammschutzmitteln.